# FASCICULE DE BREVET EUROPEEN

(11) **EP 2 873 610 B1**
(45) Date de publication et mention de la délivrance du brevet: **27.07.2016**
(21) Numéro de dépôt: 14193386.1
(22) Date de dépôt: 17.11.2014
(51) Int. Cl.: B64C 25/40

(54) **ROUE D'AÉRONEF ÉQUIPÉE D'UNE COURONNE D'ENTRAÎNEMENT À CHAÎNE**
RAD EINES LUFTFAHRZEUGS, DAS MIT EINER KETTENANTRIEBSKRONE AUSGESTATTET IST
AIRCRAFT WHEEL EQUIPPED WITH A CHAIN DRIVE RING

(30) Priorité: 15.11.2013 FR 1361228
(43) Date de publication de la demande: 20.05.2015
(73) Titulaire: Messier-Bugatti-Dowty, 78140 Vélizy-Villacoublay (FR)
(72) Inventeur: MAZARGUIL, Nicolas, 78140 Velizy-Villacoublay (FR)
(74) Mandataire: Parzy, Benjamin Alain

(56) Documents cités:
- EP-A2- 2 551 192
- WO-A1-2012/171589
- US-A- 4 379 414
- US-A1- 2006 035 739

## Description

L'invention concerne une roue d'aéronef équipée de moyens de son entraînement en rotation par un actionneur d'entraînement.

### ARRIERE-PLAN TECHNOLOGIQUE DE L'INVENTION

Il a été récemment reconnu l'avantage de motoriser les roues d'un aéronef pour pouvoir déplacer celui-ci sans l'aide de ses propulseurs. A cet égard, on connaît des roues d'aéronef munies de moyens de leur entraînement en rotation par un actionneur d'entraînement rapporté sur la partie basse de l'atterrisseur. Ces moyens d'entraînement comprennent une couronne dentée ramenée de façon rigide sur la jante de la roue. Ce type d'attelage peut se révéler difficilement compatible avec les déformations de la roue, notamment son ovalisation lors du roulage de l'aéronef, et son déplacement dû à la flexion de l'essieu sur lequel la roue est rapportée.

Récemment, il a été proposé dans le document EP 2 639 160 d'atteler une couronne dentée à une jante de roue par l'intermédiaire d'organes d'attelage présentant des jeux aptes à permettre un mouvement relatif entre la couronne dentée et la jante de la roue. Ces attelages nécessitent notamment des éléments rotulaires complexes et onéreux.

Le document EP 2551192 décrit une roue d'aéronef comportant une couronne apte à coopérer avec un actionneur.

### OBJET DE L'INVENTION

L'invention a pour objet une roue d'aéronef équipée de moyens d'entraînement en rotation permettant d'absorber ces déformations tout en ne nécessitant pas d'attelages complexes.

### PRESENTATION DE L'INVENTION

En vue de la réalisation de ce but, on propose une roue d'aéronef équipée de moyens d'entraînement en rotation rapportés sur des chapes saillant d'un flanc d'une jante de la roue, les moyens d'entraînement comportant une couronne apte à coopérer avec un actionneur d'entraînement et munie d'organes d'attelage aux chapes de la jante de sorte qu'entre deux organes d'attelage, la couronne forme un segment souple et déformable.

Ainsi, la couronne peut coopérer avec un actionneur d'entraînement comportant par exemple un pignon d'entraînement associé à deux galets d'application de la couronne contre le pignon d'entraînement. La rotation du pignon d'entraînement provoque le défilement de la couronne en regard du pignon d'entraînement, et donc la rotation de la roue par transmission d'un effort d'entraînement par les organes d'attelage. La souplesse des segments de la couronne permet l'absorption des déformées et déplacement de la roue.

Selon un mode particulier de réalisation, la couronne comprend une chaîne à plusieurs pistes dont certains des maillons sont tenus par des mâchoires des organes d'attelage.

Selon un mode particulier de réalisation de l'invention, les organes d'attelage sont adaptés à être fixés sur les chapes qui servent par ailleurs à fixer des barrettes d'entraînement de disques de freins engagés dans la jante. Cette disposition permet d'utiliser des jantes standards.

### PRESENTATION DES FIGURES

L'invention sera mieux comprise à la lumière de la description qui suit d'un mode particulier de réalisation non limitatif de l'invention, en référence aux figures des dessins annexés parmi lesquelles :
- la figure 1 est une vue en perspective du bas d'un atterrisseur d'aéronef à deux roues, l'une des roues ayant été omise pour plus de clarté ;
- la figure 2 est une vue en perspective partielle de la jante de la figure 1 montrant l'attelage des moyens d'entraînement de l'invention ;
- la figure 3 est une vue en perspective d'un organe d'attelage des moyens d'entraînement à la jante de la figure 2 ;
- la figure 4 est une vue éclatée de l'organe d'attelage de la figure 3 ;
- la figure 5 est une vue de face partielle d'une des jantes en situation sur l'atterrisseur de la figure 1.

### DESCRIPTION DETAILLEE D'UN MODE DE REALISATION DE L'INVENTION

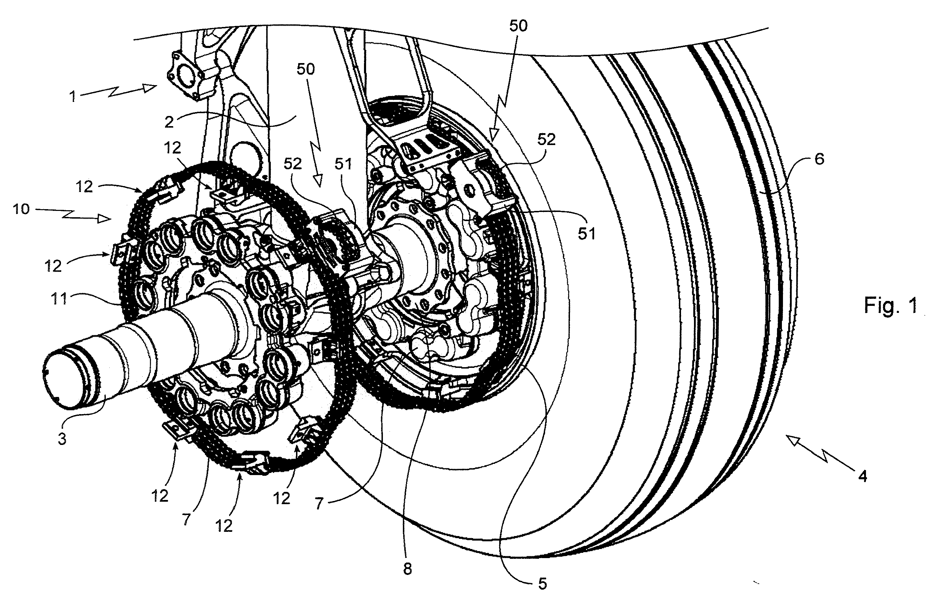

La figure 1 illustre un atterrisseur principal 1 d'aéronef dont on voit ici la tige coulissante 2 qui porte un essieu 3 adapté à recevoir deux roues 4 (l'une d'elle a été omise pour plus de clarté). Chacune des roues 4 comporte une jante 5 montée pour tourner sur l'essieu au moyen de roulements. La jante 5 porte un pneumatique 6 et reçoit ici des disques de frein (non visibles) qui sont sélectivement pressés les uns contre les autres par un actionneur de freinage 7, ici une couronne hydraulique fixée à une main d'essieu 8. Tout ceci est bien connu et n'est rappelé qu'à titre d'illustration.

Les roues 4 sont équipées de moyens d'entraînement en rotation 10 qui comportent ici une chaîne 11 conformée en couronne (ici une chaîne à trois pistes) qui est solidarisée à la jante 5 par des organes d'attelage 12.

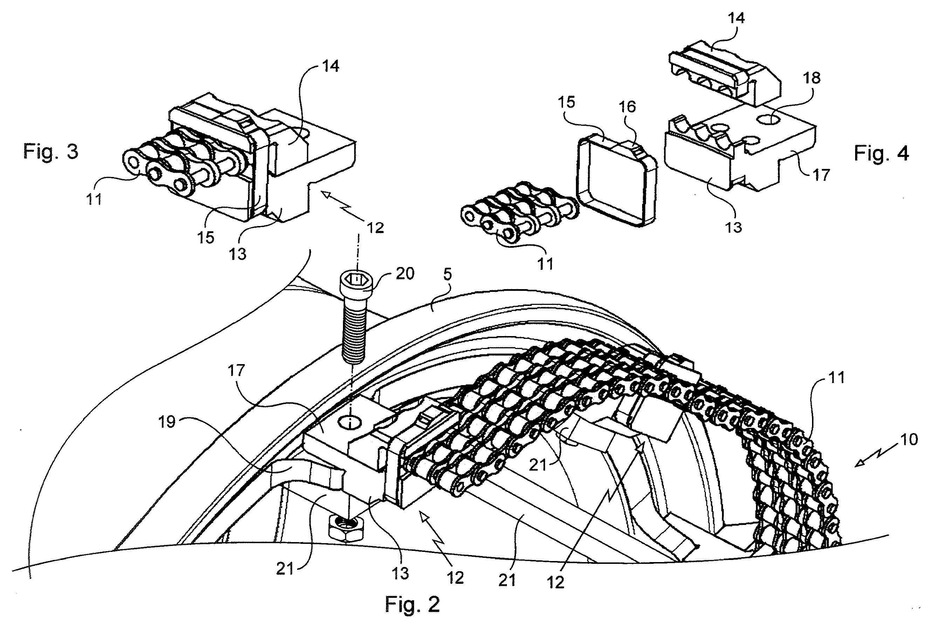

Comme cela est plus particulièrement visible sur les figures 2 à 4, chaque organe d'attelage 12 comprend ici une mâchoire interne 13 et une mâchoire externe 14 qui possèdent des dentures conformées pour pénétrer de part et d'autres de maillons de l'une des pistes externes de la chaîne 11, et ainsi enserrer lesdits maillons. Les mâchoires 13,14 sont maintenues en position serrée sur la chaîne 11 par un ligament 15 muni de moyens de serrage 16. Alternativement, on pourra utiliser tout autre moyen de maintien des deux mâchoires en position sur la chaîne, comme des vis. La mâchoire inférieure 13 est prolongée par une patte 17 munie d'un orifice 18 qui permet sa fixation à une chape 19 de la jante 5 qui s'étend en saillie d'un flanc de celle-ci, au moyen d'un boulon 20.

Selon un aspect particulier de l'invention, les chapes 19 sur lesquelles les organes d'attelage 12 sont rapportées sont précisément les chapes qui servent à fixer des barrettes de frein 21 qui servent à solidariser en rotation la jante 5 avec les disques rotors du frein (non visibles ici).

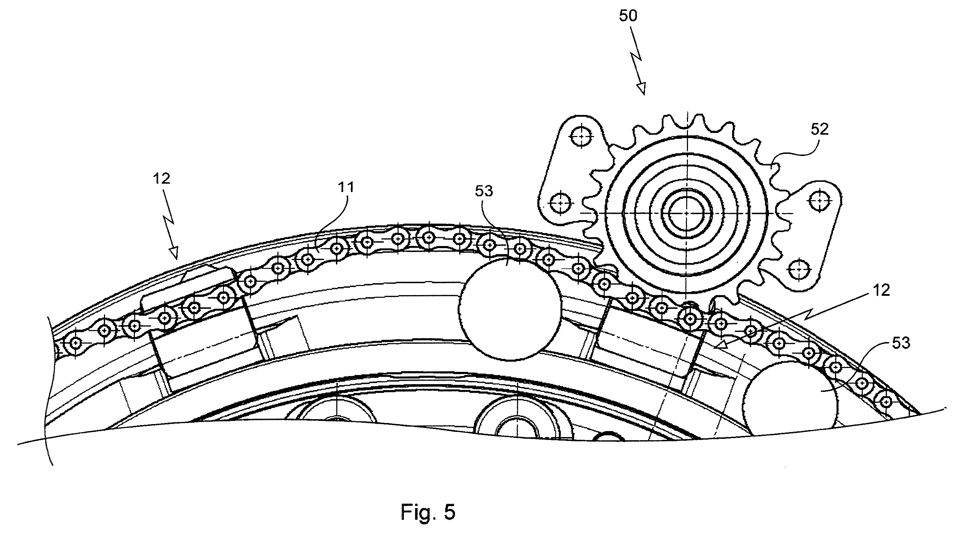

Comme cela est visible à la figure 1, la chaîne 11 est destinée à coopérer avec un actionneur d'entraînement, dont on a illustré ici uniquement l'extrémité 50 qui coopère avec la chaîne pour plus de clarté. L'extrémité 50 comporte un boîtier 51 qui reçoit un pignon d'entraînement 52 et deux galets 53 de guidage de la chaîne disposés de part et d'autre du pignon d'entraînement 52 en opposition de celui-ci, plus particulièrement visibles à la figure 5. Le pignon d'entraînement 52 et les galets de guidage 53 tournent selon des axes parallèles à l'axe de rotation de la roue.

Bien entendu, le pignon d'entraînement 52 est entraîné par un moteur de l'actionneur, l'actionneur étant fixé à un support solidaire de la tige coulissante 2. Ainsi, une rotation du pignon d'entraînement 52 provoque un défilement de la chaîne, qui transmet un couple de rotation à la roue par l'intermédiaire des organes d'attelage 12.

Selon un aspect important de l'invention parfaitement visible à la figure 5, la chaîne 11 forme entre deux organes d'attelage 12 des segments souples et donc déformables qui permettent d'absorber à la fois une déformation et un déplacement de la roue en regard de l'actionneur d'entraînement.

L'invention n'est pas limitée à ce qui vient d'être décrit, mais englobe au contraire toute variante entrant dans le cadre défini par les revendications.

En particulier, bien qu'ici les organes d'attelage des moyens d'entraînement soient fixés aux chapes qui servent à maintenir les barrettes de frein, on pourra bien sûr prévoir sur la jante des chapes spécifiques pour y atteler les organes d'attelage des moyens d'entraînement.

Bien que les moyens d'entraînement comportent ici une chaîne à trois pistes, on pourra bien sûr utiliser d'autres types de chaînes, et plus généralement tout moyen d'entraînement apte à coopérer avec un actionneurs d'entraînement porté par l'atterrisseur, pourvu qu'il présente des segments souples entre deux organes d'attelage.

## Revendications

1. Roue d'aéronef équipée de moyens d'entraînement (10) en rotation rapportés sur des chapes (19) saillant d'un flanc d'une jante (5) de la roue, les moyens d'entraînement comportant une couronne (11) apte à coopérer avec un actionneur d'entraînement, **caractérisée en ce que** la couronne est munie d'organes d'attelage (12) aux chapes de la jante de sorte qu'entre deux organes d'attelage, la couronne forme un segment souple et déformable.

2. Roue d'aéronef selon la revendication 1, dans laquelle la couronne comprend une chaîne (11) à plusieurs pistes.

3. Roue d'aéronef selon la revendication 2, dans laquelle les organes d'attelage comprennent chacun des mâchoires (13, 14) adaptées à enserrer des maillons de la chaîne.

4. Roue d'aéronef selon la revendication 3, dans laquelle au moins l'une des mâchoires comporte une patte (17) qui s'étend pour permettre sa fixation à l'une des chapes (19) de la jante.

5. Roue d'aéronef selon la revendication 1, comportant des barrettes de frein (21) qui sont fixées aux mêmes chapes que les organes d'attelage des moyens d'entraînement.

## Patentansprüche

1. Luftfahrzeugrad, das mit Drehantriebsmitteln (10) ausgestattet ist, die auf von einer Flanke einer Felge (5) des Rades vorstehenden Auflagern (19) befestigt sind, wobei die Antriebsmittel einen Kranz (11) umfassen, der dazu geeignet ist, mit einem Antriebsaktor zusammenzuwirken, **dadurch gekennzeichnet, dass** der Kranz mit Kopplungselementen (12) zur Kopplung mit den Auflagern der Felge versehen ist, derart, dass der Kranz zwischen zwei Kopplungselementen ein flexibles und verformbares Segment bildet.

2. Luftfahrzeugrad nach Anspruch 1, wobei der Kranz eine Kette (11) mit mehreren Spuren umfasst.

3. Luftfahrzeugrad nach Anspruch 2, wobei die Kopplungselemente jeweils Spannbacken (13, 14) umfassen, die dazu geeignet sind, Glieder der Kette einzuspannen.

4. Luftfahrzeugrad nach Anspruch 3, wobei mindestens eine der Spannbacken eine Halterung (17) umfasst, die sich so erstreckt, dass sie ihre Befestigung an einem der Auflager (19) der Felge ermöglicht.

5. Luftfahrzeugrad nach Anspruch 1, umfassend Bremsstäbe (21), die an denselben Auflagern wie die Kopplungselemente der Antriebsmittel befestigt sind.

## Claims

1. Aircraft wheel equipped with rotational drive means (10) attached to clevises (19) projecting from a flank of a rim (5) of the wheel, **characterized in that** the drive means comprise a ring (11) able to cooperate with a drive actuator and provided with members (12) for attaching to the clevises of the rim such that, between two attachment members, the ring forms a flexible and deformable segment.

2. Aircraft wheel according to Claim 1, in which the ring comprises a chain (11) with a plurality of tracks.

3. Aircraft wheel according to Claim 2, in which the attachment members each comprise jaws (13, 14) adapted to clamp links of the chain.

4. Aircraft wheel according to Claim 3, in which at least one of the jaws comprises a tab (17) which extends so as to allow it to be fixed to one of the clevises (19) of the rim.

5. Aircraft wheel according to Claim 1, comprising brake bars (21) which are fixed to the same clevises as the members for attaching the drive means.
